**Europäisches Patentamt**

**European Patent Office**

**Office européen des brevets**

(19)

(11) Publication number : **0 504 088 A1**

(12) # EUROPEAN PATENT APPLICATION

(21) Application number : **92500016.8**

(22) Date of filing : **21.02.92**

(51) Int. Cl.⁵ : **D01G 11/04**

(30) Priority : **27.02.91 ES 9100506**

(43) Date of publication of application :
**16.09.92 Bulletin 92/38**

(84) Designated Contracting States :
**AT BE CH DE DK FR GB GR IT LI LU MC NL PT SE**

(71) Applicant : **MARLASCA, S.A.**
**Poligono Industrial Can Casablancas, Calle Vallés no. 16**
**E-08192 Sant Quirze del Valles (Barcelona) (ES)**

(72) Inventor : **Marlasca Garcia, Francisco**
**Plaza Vallés no. 44, 1o-1a**
**E-08201 Sabadell (ES)**

(74) Representative : **Manresa Val, Manuel**
**Gerona n. 34**
**E-08010 Barcelona (ES)**

(54) **Improvements in rag tearing machines for the textile industry.**

(57)    Improvements in rag tearing machines for the textile industry.

The machine embodies an inlet station (1) in which the materials to be processed for first time (23) and the waste drained to be recirculated (19) are poured, separately, on the entering apron (2). Several rag tearing stations (4a, 4b ,..) between which there exists fan groups (5a, 5b...) with side door (7) access which throw the material coming from the preceding station to a filtering box (9) in which interior the powder, after a sharp bend (10), passes through a pierced plate (11) ; the very material falls down and passes to the following station and so on until the end of the machine, however, there exists some gates (14) and if the said material is considered sufficiently processed, the respective gate opens and the material goes out of the machine through a duct (15).

FIG.1

EP 0 504 088 A1

The object of this invention relates to improvements to rag tearing machines used in the textile industry, with whose application significant advantages of practical and economic feature are achieved, namely on similar existing machines as it will be disclosed below.

Machines of this type are known since a long time ago. The Introduction Patent 322,339, for example, disclosed a machine for opening and tearing textile materials which basically included a supply system which conveyed the textiles products or waste through any number of rag tearing units mounted in serie, each of the said units being composed of a rag tearing drum or cylinder provided with pins in front of which the products were carried by a rotating roll in front of a conveyor. After each drum, the products are collected on a plate and sucked through a pierced and rotating metallic drum which is depressed thanks to a sucking fan, which acts as filter. At the bottom of the machine there is a conveyor belt which recirculates the rags or threads not torn toward the initial supply system.

Anyway, this type and other existing machines and more or less inspired on same principle, are produced in modular form, that means that the lap of fibers moves through several modules, each being provided with a rag tearing drum with mentioned fittings and elements, constituting several steps or stations. In some machines, the number of the said stations is two or three; in other machines they are even six. The material sustains the process of all of them until the said material is collected at the outlet of the final drum.

In fact, there occurs that in accordance with the type and nature of the material, the process should not necessarily include a high number of drums, for example six, but that sometimes with less drums it is enough to obtain a satisfactory result. This, therefore, makes necessary to have available several types of machines with one, two, three and even more drums, respectively, to work with the different types of more or less coarse material. The significant economic investment is obvious.

These improvements are channeled first toward achieving the same effects for all kind of material using a single machine, for which aim it is provided this single machine has available movable elements or gates between each drum and the following, allowing optionally the outlet of the material processed and sufficiently defibered without having it passing through all the drums until reaching the last one, which means a very significant saving as it is not necessary to purchase so many machines as different numbers of drums or rag tearing stations there is and not having to uselessly operate such an amount of modules or stations.

On the other hand, the machines known have available, in general, a single powder sucking device at the material inlet. These improvements provide a loading system between each drum that includes, at the outlet of each sucking device, a duct with one of its faces with grating, which favours the powder being expelled in the said area, the said powder remaining suspended and improving the sort of filtering there were between a station and the following in the machines known.

Same improvements provide the transfer of the material from a drum or station to the immediately following station is achieved by centrifugal fans. This allows, without any doubt, to best apportion the material to be treated in the said following station, throughout the width of the machine. Other machines known, carry one or several fans always forming a depression by means of a pierced cylinder or similar elements for the passing of the material from one station to the following:the said depression is achieved on the sides of the very machine, therefore the said side of the machine is working more than the rest of the width thereof, to the detriment of an even apportionment of the material.

In addition, in the machine object of these improvements an original access of the said fans is provided, consisting in opening one of its lateral inlets in order to clean the turbine and its interior without having to disassemble them.

The material processed at each step or station of the machine is directly shifted toward the final outlet, as it was already told before, or, should it be necessary, it is subjected to all the steps, one by one as it is already made presently; in the event the material wasted was not correctly processed, it is drained and falls down a pneumatic carrying duct that conveys it to the inlet of the very machine to be recirculated. We must point out, in the machine according to these improvements, that the said inlet is divided into two ducts:one for the waste which has been drained and which are poured on the inlet apron and another duct which conveys the new material to be defibered which is poured on those waste on the inlet apron with the subsequent advantage that, having the new material to be defibered on the drained material, this later is best retained by the inlet device when being defibered.

These and other characteristics will be best understood by means of the following description to which three sheets of drawing are attached in which is shown a practical case of embodiment which is mentioned for example purpose, not limitative, of the scope of this patent of invention.

In the said drawings:

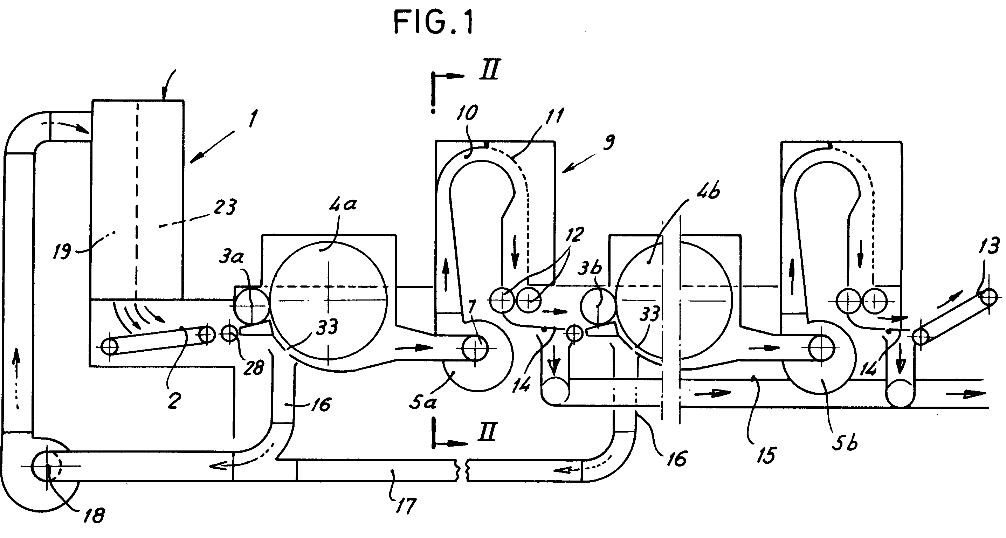

Figure 1 shows a general view of the machine object of these improvements.

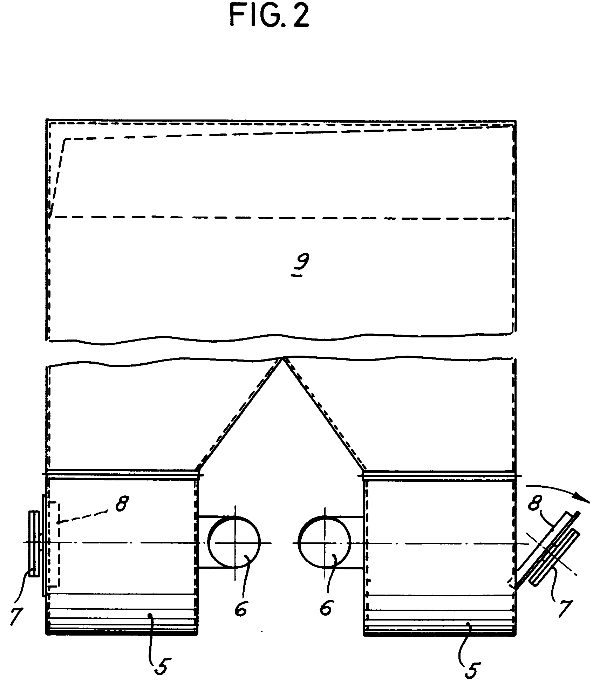

Figure 2 shows a cross section according to the section plane II-II.

Figure 3 shows a detail of the material entering the same machine.

And Figure 4 is a detail of a grooved cylinder.

According to that figures, the machine subject matter of these improvements embodies an unit -1- loader of waste to be teared which ends on a circulating belt -2- which conveys it toward the cylinder -3a- which introduces them to the nail o similar drum -4a- at whose outlet the defibered material is sucked by the centrifugal fans -5- for its transfer to the following step or station -4b-. The use of two fans -5- instead of only one, allows a more even suction of the material throughout the width of the machine from the preceding station -4a- and a more even throwing it throughout the width for the following station -4b-.

It must be noted that to gain access and clean the interior of the said fans -5- it was provided the two sides, are lowerable, as doors -8-.

Interbedded between one station -4a- and the following -4b-, it was provided, after the said fans -5- a box -9- through which the material partly processed is thrown uprightly rising and on whose top there is a duct -10- bended about 180 degrees to return the material uprightly downward; the second half of the said bend as well as a wall of the downward slope of the duct are pierced -11-. The powder the material contains is forced to pass through those holes due to the centrifugal force granted by the fans -5- impulsion; the very material falls down, passes between the rolls -12- and cylinder -3b- and reaches the large drum -4b- the process being repeated until going out of the last step or station -4b- where it is conveyed to the right place by the belt -13-. This way, then, the material will have passed through all the stations of the machine -4a-4b-.

However, it may occur that due to the nature of the waste, it will be only necessary to process the material at one or several stations, not in all of them. In this case, gates -14- have been provided between one station and the following, after the filtering -11-, opening properly the gate -14-, the material sufficiently processed falls down a conveyor system -15- for example pneumatic, which conveys it directly out of the machine.

The operation of the said gates -14- will be carried out by means of the best fitted elements: mechanic, electric, pneumatic, hydraulic, etc. not shown.

Obviously, , under -33- each drum -4-, the waste is divided in two parts:

the part of material which is still being treated in the subsequent stations of the machine or which, through a gate -14- goes directly outside because it is already sufficiently processed, and the waste which fall down by the respective branch circuit -16- toward the collector -17- which, thanks to the suction produced by the fan -18- conveys them to the inlet -17- of the machine for its recirculation.

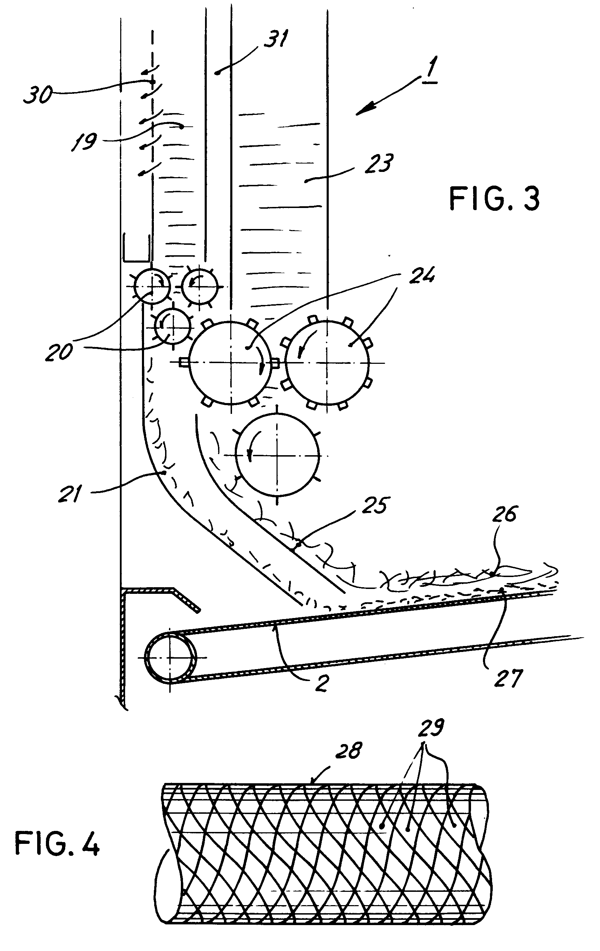

Note (fig. 3) that the said waste falls down through the hopper -19- and through the rolls -20- and chute -21- it has access to the apron or belt -2-.

The "new" waste, on the contrary, is poured through the opening -22-, it falls through the other hopper -23- and through the rolls -24- it slides on another chute -25- falling finally down on the layer of waste forming two layers: a higher layer of new material to be treated -26- and a lower layer of recirculated waste -27-. Both will be conveyed to the first large drum -4a- with prior passing on the roll -28- delivering to the roll -32- with helicoidal grooves in two directions, forming rhombuses -29-. This initial arrangement in two layers, it was checked operates more correctly because the waste recycled has best retention.

Conventionally, the inlet module or loader -1- of the machine embodies a multipierced wall -30- for respiration or aeration of the very module -1- and a vibrating wall -31- as a shutting post, to make the material falling down easy, as it is already known in other machines, for example those of the firms RIETER or MARZOLI.

Each station of this machine is individual with respect to the others, that means it can be easily disassembled or taken apart.

## Claims

1.- Improvements to the rag tearing machines for the textile industry, of the type embodying an entry module of the material to be torn and several rag tearing modules mounted in serie, constituted each of them by a large nail drum or similar in front of which the material is conveyed by means of an entering cylinder, essentially characterized in that the inlet module contains ducts apart from each other, one for the material to be processed for first time and the other for the waste to be recirculated in the machine, because at the outlet of the large drum of each rag tearing module, there is one or several fans in parallel, whose access may be gained, and which, sucking the material from the said outlet of the large drum, throws it in a box separating the powder, and because at the outlet of the said box, in the run of the material toward the following module, there is a gate that may remain closed and facilitate the prosecution of the said material toward the said following module or be open by means of conventional operating elements and to allow the direct access of the said material outside the machine by passing through a suitable hopper and duct.

2.- Improvements according to claim 1, characterized in that the duct of waste to be recirculated of the mentioned inlet module embodies an inlet opening which ends in a hopper at which bottom there is opening rolls which deliver this waste to the surface of a circulating belt which conveys them to the first rag tearing module.

3.- Improvements according to the preceding claims characterized in that the duct of material to be treated for first time embodies an inlet which ends in a hopper in which bottom there are opening rolls through which the said material passes and is delivered on the layer of waste of the said circulating belt which conveys both, material and waste, to the first rag tearing module.

4.- Improvements according to the preceding claims, characterized in that the access gained to each fan of those located at the outlet of each rag tearing module consists in the fact that one of its sides is passable, as a door.

5.- Improvements according to the preceding claims, characterized in that the box separating the powder, located at the outlet of the section of fans, contains a duct of material uprightly rising at whose top point it is bent about 180 degrees descending thereafter, the part of the said duct corresponding to the second quadrant of the said bend being multipierced, on the wall farer from the center of the very bend, and the following descending part of the same wall.

FIG.1

# FIG. 2

FIG. 3

FIG. 4

EP 0 504 088 A1

**European Patent Office**

**EUROPEAN SEARCH REPORT**

Application Number

EP 92 50 0016

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 280 900 (AUTEFA MASCHINENFABRIK GMBH) <br> * the whole document * <br> --- | 1,2,3 | D01G11/04 |
| A | EP-A-0 311 530 (CONSTRUCTIONS MECANIQUES F.LAROCHE & FILS) <br> * the whole document * <br> --- | 1,2,3 | |
| A | GB-A-2 142 351 (COPELY DEVELOPMENTS LTD.) <br> --- | | |
| A | DE-C-524 006 (SCHIRP,R) <br> ----- | | |

**TECHNICAL FIELDS SEARCHED (Int. Cl.5)**

D01G

The present search report has been drawn up for all claims

| Place of search | Date of completion of the search | Examiner |
|---|---|---|
| THE HAGUE | 23 JUNE 1992 | MUNZER E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8